# EUROPÄISCHE PATENTSCHRIFT

(11) **EP 3 883 723 B1**
(45) Veröffentlichungstag und Bekanntmachung des Hinweises auf die Patenterteilung: **14.08.2024**
(21) Anmeldenummer: 19804690.6
(22) Anmeldetag: 12.11.2019
(51) Int. Cl.: B23Q 9/00, B27C 5/10

(54) **HANDWERKZEUGMASCHINE, KANTENFÜHRUNG SOWIE WERKZEUGSYSTEM**
HAND-HELD POWER TOOL, EDGE GUIDE AND TOOL SYSTEM
MACHINE-OUTIL MANUELLE, GUIDE DE BORD ET SYSTÈME D'OUTILLAGE

(30) Priorität: 19.11.2018 DE 102018219736
(43) Veröffentlichungstag der Anmeldung: 29.09.2021
(73) Patentinhaber: Robert Bosch GmbH, 70442 Stuttgart (DE)
(72) Erfinder: WIERZCHON, Peter, Morton Grove, Illinois, 60053 (US)
(86) Internationale Anmeldenummer: PCT/EP2019/080979
(87) Internationale Veröffentlichungsnummer: WO 2020/104247

(56) Entgegenhaltungen:
- EP-A1- 0 765 719
- DE-A1- 3 612 214
- DE-A1- 3 934 358
- US-A- 3 635 268

## Beschreibung

### Stand der Technik

Die vorliegende Erfindung betrifft eine Handwerkzeugmaschine, insbesondere eine Oberfräse, mit einem Maschinengehäuse und einer Abstützeinrichtung zur Führung der Handwerkzeugmaschine an einem Werkstück, wobei die Abstützeinrichtung ein Trägerelement aufweist, in dem das Maschinengehäuse zumindest abschnittsweise aufgenommen und befestigt ist, wobei an einem vom Maschinengehäuse abgewandten Endflansch des Trägerelements eine Fußplatte für den Durchgriff eines Einsatzwerkzeugs, insbesondere eines Fräswerkzeugs, sowie zur Anlage an einem Werkstück befestigt ist, und wobei am Endflansch des Trägerelements eine Kantenführung zur Führung der Handwerkzeugmaschine entlang einer Kante des Werkstücks befestigbar ist. Weiterhin hat die Erfindung eine entsprechende Kantenführung sowie ein zugeordnetes Werkzeugsystem zum Gegenstand.

Aus dem Stand der Technik sind Handfräsen zur Holzbearbeitung, wie z.B. Oberfräsen, in großer Variationsbreite bekannt. Um zufriedenstellende Arbeitsergebnisse zu erzielen, sind in der Regel Vorrichtungen zur exakten Führung einer entsprechenden Oberfräse in Relation zu einem mittels der Oberfräse zu bearbeitenden Werkstück erforderlich.

Aus der EP 1 375 060 A1 ist eine multifunktionale Führungseinrichtung für verschiedene Handwerkzeugmaschinen zur Holzbearbeitung, wie z.B. eine Bandschleifmaschine, eine Kreissäge oder eine Oberfräse, bekannt. Die Führungseinrichtung umfasst eine Führungsplatte, die auf einem plattenförmigen Werkstück mittels einer Schraubzwinge befestigbar ist. Die hohlkammerartige Führungsplatte verfügt oberseitig über eine Vielzahl von parallel sowie gleichmäßig zueinander beabstandet angeordneten, T-förmigen Führungsnuten. In die T-förmigen Führungsnuten kann im Bedarfsfall ein massiver Führungsstab mit einer I-förmigen Querschnittsgeometrie spielfrei eingeschoben werden. An diesem Führungsstab ist zur Führung einer Handwerkzeugmaschine zur Holzbearbeitung, wie z.B. einer Oberfräse, ein unterseitiger Gleitschuh eines Führungsarms längsverschiebbar aufgenommen, wobei der Führungsarm rechtwinklig zur Verschiebungsrichtung des Gleitschuhs auf dem Führungsstab orientiert ist. Der Führungsarm ist mittels einer durch einen Drehknopf betätigbaren Klemmeinrichtung stufenlos in einer beliebigen Längsposition am Gleitschuh arretierbar. Eine Abstützeinrichtung der mittels der multifunktionalen Führungseinrichtung zu führenden Oberfräse weist zwei parallel zum Führungsarm orientierte, auswärts gerichtete Bohrungen zum Einstecken von zwei Stiften eines Gelenkelements zur zumindest zeitweisen Befestigung des Gelenkelements an der Abstützeinrichtung der Oberfräse auf. An einem von dem Gleitschuh weggerichteten, freien Ende des Führungsarms ist dieser mittels einer Steckwelle gelenkig mit dem Gelenkelement und somit mit der Abstützeinrichtung der Oberfräse verbindbar. Die multifunktionale Führungseinrichtung ermöglicht somit bei entsprechend an dem zu bearbeitenden Werkstück festgeklemmter Führungsplatte eine präzise kantenparallele Führung einer Oberfräse oder einer anderen Handwerkzeugmaschine zur Holzbearbeitung in Relation zu dem Werkstück.

US 3 635 268 A offenbart eine Handwerkzeugmaschine nach dem Oberbegriff von Anspruch 1.

DE 39 34 358 A1 offenbart eine Oberfräse mit einer Kantenführung.

### Offenbarung der Erfindung

Die vorliegende Erfindung stellt eine Handwerkzeugmaschine nach Anspruch 1 bereit.

Die Erfindung ermöglicht somit die Bereitstellung von einer in einem vereinfachten Herstellungsprozess hergestellten Kantenführung. Es ist lediglich eine bevorzugt radial auswärts gerichtete, rechteckförmige Nut mit mindestens einer bohrungsartigen Vertiefung für ein darin aufnehmbares Befestigungselement in den vorzugsweise kreisringförmigen Endflansch des hohlzylindrischen Trägerelements der Abstützeinrichtung einzubringen, woraus ein vereinfachter Fertigungsprozess resultiert. Aufgrund der zudem verliersicher in einem Bereich zwischen der Fußplatte und dem kreisringförmigen Endflansch angeordneten Befestigungselemente ist eine vereinfachte Handhabbarkeit für einen Benutzer gegeben. Die Nut mit einer vorzugsweise rechteckigen Querschnittsgeometrie weist bevorzugt zwei parallele Nutwände und einen planen Nutgrund auf, wodurch sich die Fertigung weiter vereinfacht.

Zur zeitweisen Befestigung der Kantenführung an dem Endflansch des Trägerelements der Abstützeinrichtung ist mindestens ein bevorzugt als Gewindeschraube ausgebildetes Befestigungselement vorgesehen, das in eine zugeordnete Gewindebohrung in einem Nutgrund der Nut einschraubbar ist. Hierdurch ist eine verdrehsichere und robuste Befestigung des Haltearms an der Abstützeinrichtung gegeben.

Bevorzugt ist eine Tiefe der Nut größer bemessen als eine Materialstärke des Befestigungsabschnitts des Haltearms. Infolgedessen lässt sich die mindestens eine Gewindeschraube ohne die Gefahr des Herausfallens zumindest soweit aus der mindestens einen Gewindebohrung herausdrehen, dass sich der Befestigungsabschnitt des Haltearms leicht in die Nut einführen lässt.

Gemäß einer vorteilhaften Weiterbildung weist der Befestigungsabschnitt des Haltearms mindestens eine Durchgangsbohrung für die mindestens eine Gewindeschraube auf und die mindestens eine Durchgangsbohrung geht in einen zu einem Haltearmende hin offenen Längsschlitz über. Hierdurch kann der Haltearm der Kantenführung ohne die Notwendigkeit des vorherigen Herausschraubens der Befestigungsschrauben in die Nut eingeführt werden.

Bevorzugt weisen der mindestens eine Längsschlitz eine V-förmige Fase und die mindestens eine Durchgangsbohrung eine Senkung auf, wobei die Fase und Senkung im Bereich einer vom Maschinengehäuse abgewandten Unterseite des Befestigungsabschnitts des Haltearms vorgesehen sind und die Senkung tiefer als die Fase ausgebildet ist. Hierdurch wird das Einschieben des Befestigungsabschnitts des Haltearms der Kantenführung in die Nut weiter erleichtert. Die Senkungen der Durchgangsbohrungen sind vorzugsweise etwa 0,5 mm bis 1,0 mm tiefer als die Fasen ausgebildet.

Bei einer vorteilhaften Weiterbildung weist die Fußplatte zumindest eine Durchgangsbohrung zum bevorzugt geringfügig spielbehafteten Durchführen eines Werkzeugs, insbesondere eines Schraubendrehers, zum Festziehen der mindestens einen Befestigungsschraube auf, wobei ein Durchmesser dieser Durchgangsbohrung kleiner als ein Kopfdurchmesser der mindestens einen Gewindeschraube ist und die zumindest eine Durchgangsbohrung der Fußplatte zentrisch und oberhalb der mindestens einen Gewindebohrung des Nutgrunds ausgebildet ist. Infolgedessen sind die Gewindeschrauben verliersicher zwischen der Fußplatte und dem Nutgrund der Nut des kreisringförmigen Endabschnitts des Trägerelements lagerbar und zugleich vom Benutzer mittels eines geeigneten Schraubendrehers anziebar bzw. festziehbar.

Vorzugsweise weist die mindestens eine Gewindeschraube einen im Wesentlichen korrespondierend zu der Fase des Längsschlitzes und der Senkung der Durchgangsbohrung ausgeführten Senkkopf auf. Aufgrund dessen lässt sich die mindestens eine Gewindeschraube hinreichend weit in die Befestigungsbohrungen des Nutgrunds einschrauben, um einen zuverlässigen Sitz zu ermöglichen. Alternativ können auch Gewindeschrauben mit einem Zylinderkopf Verwendung finden.

Bei einer technischen Weiterbildung ist vorgesehen, dass die mindestens eine Gewindeschraube eine derartige axiale Länge aufweist, dass die mindestens eine Gewindeschraube stets im Gewindeeingriff mit der zugeordneten Gewindebohrung steht. Hierdurch sind die Gewindeschrauben unabhängig vom Anzugsgrad verlässlich gegen das Herausfallen aus der Nut gesichert. Die Gewindeschrauben lassen sich so weit aus den Gewindebohrungen der Nut herausschrauben, bis deren Köpfe unterseitig an die Fußplatte anstoßen, was bevorzugt ungefähr nach 2 bis 3 Umdrehungen der Fall ist. Infolgedessen ist eine schnelle und sichere Befestigung der Kantenführung gegeben.

Bevorzugt ist die kreisringförmige Fußplatte mit einem transparenten Kunststoff gebildet. Aufgrund der Transparenz der Fußplatte wird das Einführen des Befestigungsabschnitts in die Nut des kreisringförmigen Endabschnitts des Trägerelements der Abstützeinrichtung und das Anziehen bzw. das Festziehen der Gewindeschrauben für einen Benutzer weiter erleichtert.

Bei einer vorteilhaften Fortbildung ist vorgesehen, dass der Senkkopf der mindestens einen Gewindeschraube zum Festziehen mittels des Werkzeugs eine Antriebsgeometrie nach Art eines Kreuzschlitzes, eines Innensechsrunds oder eines Innenmehrkants für das Werkzeug aufweist. Infolgedessen ist die Kantenführung mit einer Vielzahl von unterschiedlichen Werkzeugen des Benutzers kompatibel, wenn der Kantenführung bzw. dem Werkzeugsystem Gewindeschrauben mit entsprechenden Antriebsgeometrien beiliegen.

Darüber hinaus betrifft die Erfindung eine Kantenführung zur Führung einer Handwerkzeugmaschine gemäß einem der vorhergehenden Ansprüche entlang einer Kante eines Werkstücks mit einem Haltearm. Der Haltearm weist einen Befestigungsabschnitt auf, in dem mindestens eine Durchgangsbohrung für eine zugeordnete Gewindeschraube ausgebildet ist. Die mindestens eine Durchgangsbohrung geht in einen zu einem Haltearmende hin offenen Längsschlitz über, wobei der Längsschlitz eine V-förmige Fase und die mindestens eine Durchgangsbohrung eine Senkung aufweist. Infolgedessen ist eine einfache und zugleich robuste Befestigung der Kantenführung an einer solchen Handwerkzeugmaschine, insbesondere einer Oberfräse, möglich.

Ferner betrifft die Erfindung ein Werkzeugsystem mit einer oben beschriebenen Handwerkzeugmaschine und mit einer oben beschriebenen Kantenführung. Das Werkzeugsystem erlaubt einem Benutzer somit sicher reproduzierbare und maßhaltige Arbeitsergebnisse bei der Bearbeitung von Werkstücken aus Holz oder Kunststoff zu erzielen.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht einer exemplarisch als Oberfräse ausgeführten Handwerkzeugmaschine,
- Fig. 2: eine perspektivische Unteransicht der Oberfräse mit der Abstützeinrichtung von Fig. 1 und einer daran befestigten Kantenführung,
- Fig. 3: eine stark vergrößerte perspektivische Ansicht eines Befestigungsabschnitts eines Haltearms der Kantenführung von Fig. 2,
- Fig. 4: eine perspektivische Teilansicht eines kreisringförmigen Endflansches der Abstützeinrichtung von Fig. 1 von unten, mit einer daran befestigten, kreisringförmigen Fußplatte, einer Nut und darin eingeschraubten Gewindeschrauben,
- Fig. 5: eine perspektivische Teilansicht des kreisringförmigen Endflansches von Fig. 3, mit zwei Gewindebohrungen für die Gewindeschrauben, und
- Fig. 6: eine perspektivische Teilansicht einer der Gewindeschrauben von Fig. 4.

### Beschreibung der Ausführungsbeispiele

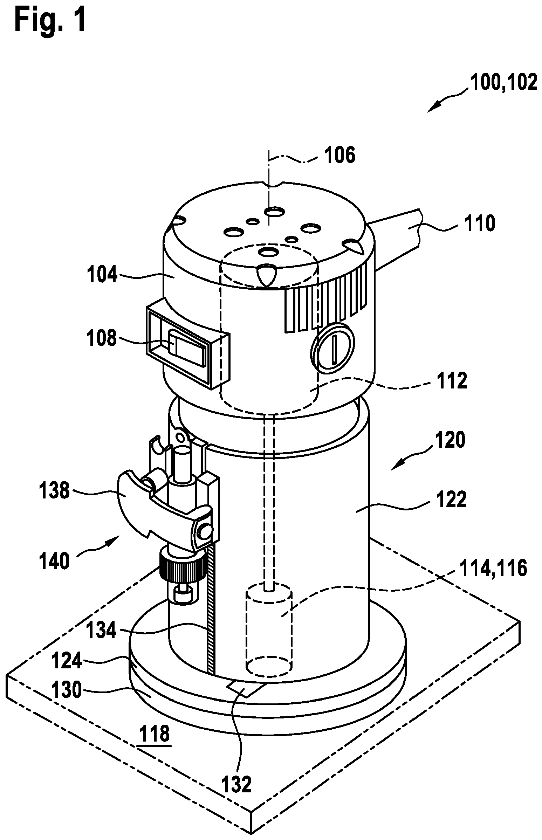

Fig. 1 zeigt eine Handwerkzeugmaschine 100, die beispielhaft als Oberfräse 102 ausgebildet ist und bevorzugt über ein Maschinengehäuse 104 verfügt. Das Maschinengehäuse 104 hat illustrativ eine Längsachse 106 und ist rein exemplarisch zumindest annähernd zylindrisch ausgebildet. Darüber hinaus verfügt die Handwerkzeugmaschine 100 beispielhaft über einen Netzschalter 108 sowie eine elektrische Netzzuleitung 110. Es sei jedoch an dieser Stelle darauf hingewiesen, dass die vorliegende Erfindung nicht auf eine netzabhängig betreibbare und handgeführte Oberfräse 102 beschränkt ist, sondern vielmehr auch bei netzunabhängig betreibbaren Oberfräsen Anwendung finden kann, die zur Stromversorgung z.B. mechanisch und elektrisch mit einem zugeordneten Akkupack verbindbar sind oder die über einen pneumatischen Antrieb verfügen.

Mittels eines hier beispielhaft elektrischen Antriebsmotors 112 ist ein Einsatzwerkzeug 114 drehend antreibbar, wobei das Einsatzwerkzeug 114 hier lediglich exemplarisch als ein im Wesentlichen zylindrisches Fräswerkzeug 116 ausgeführt ist. Zur möglichst präzisen, bevorzugt planparallelen Führung der Oberfräse 102 an einem z.B. plattenförmigen, vorzugsweise ebenen Werkstück 118 verfügt die Oberfräse bevorzugt über eine Abstützeinrichtung 120 mit einem Trägerelement 122 zur zumindest abschnittsweisen Aufnahme des Maschinengehäuses 104. Das Trägerelement 122 ist hier rein exemplarisch zumindest im Wesentlichen hohlzylindrisch ausgebildet.

An einem dem Werkstück 118 zugewandten, vorzugsweise kreisringförmigen Endflansch 124 des Trägerelements 122 der Abstützeinrichtung 120 ist bevorzugt eine exemplarisch ebenfalls angenähert kreisringförmige Fußplatte 130 mit einer Ausnehmung 132 zum Durchgriff des Einsatzwerkzeugs 114 bzw. des Fräswerkzeugs 116 auf das Werkstück 118 ausgebildet. Der kreisringförmige Endflansch 124 des Trägerelements 122 verläuft hier lediglich beispielhaft rechtwinklig zu der Längsachse 106 des Maschinengehäuses 104. An dem Endflansch 124 des Trägerelements 122 ist zudem die Fußplatte 130, die als eine unmittelbare Anlagefläche für das Werkstück 118 vorgesehen ist, mittels hier nicht dargestellter Befestigungselemente, wie z.B. Gewindeschrauben oder dergleichen, befestigt. Das im Wesentlichen hohlzylindrische Trägerelement 122 verfügt bevorzugt über einen durchgehenden Längsschlitz 134, der parallel zur Längsachse 106 des Maschinengehäuses 104 verläuft. Aufgrund des axialen Längsschlitzes 134 verfügt das Trägerelement 122 der Abstützeinrichtung 120 in Umfangsrichtung über eine hinreichend hohe federnde Elastizität, so dass das Trägerelement 122 der Abstützeinrichtung 120 auf dem Maschinengehäuse 104 z.B. mittels eines Spannhebels 138 einer Spanneinrichtung 140 an nahezu jeder beliebigen axialen Position festklemmbar ist. Die Spanneinrichtung 140 ist dem auf dem Gebiet von Handwerkzeugmaschinen tätigen Fachmann aus dem Stand der Technik hinreichend geläufig, so dass zwecks Knappheit und Kürze der Beschreibung auf eine eingehendere Darstellung der konstruktiven Details hiervon verzichtet wird.

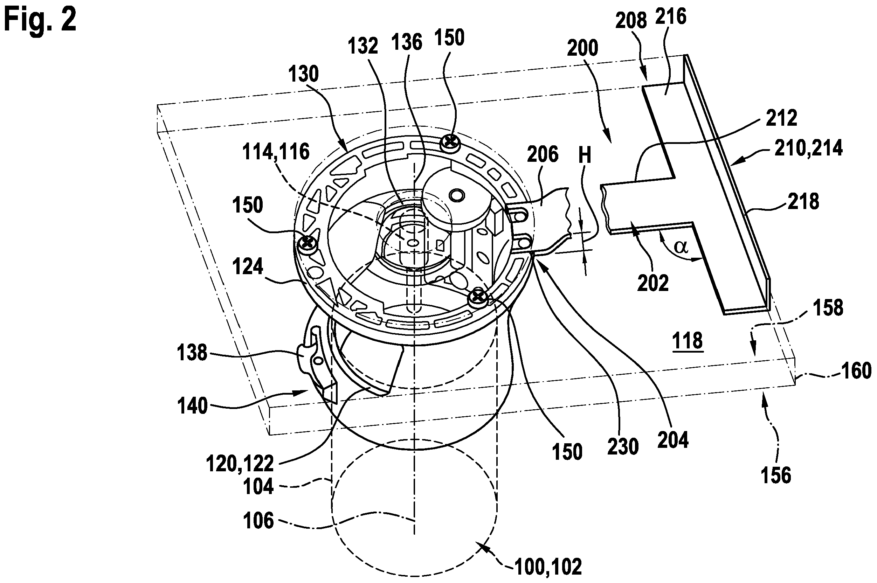

Fig. 2 zeigt die Oberfräse 102 mit der Abstützeinrichtung 120 von Fig. 1 und einer daran befestigten Kantenführung 200. Das lediglich mit gestrichelten Linien angedeutete Maschinengehäuse 104 der als Oberfräse 102 ausgeführten Handwerkzeugmaschine 100 ist bevorzugt mittels des Spannhebels 138 der Spanneinrichtung 140 in dem Trägerelement 122 der Abstützeinrichtung 120 axial festgesetzt. Der kreisringförmige Endflansch 124 ist mit der gleichfalls kreisringförmigen Fußplatte 130 hier lediglich exemplarisch mithilfe von drei konstruktiv identisch ausgeführten, als Gewindeschrauben 150 ausgeführten Befestigungselementen, fest verbunden. Die bevorzugt mit einem zumindest teilweise transparenten bzw. durchsichtigen Kunststoff gebildete Fußplatte 130 verfügt für den Zugriff des Fräswerkzeugs 116 auf das plattenförmige Werkstück 118 vorzugsweise über eine zentrisch zu diesem angeordnete und hier illustrativ kreisrunde Ausnehmung 132. Eine Rotationsachse 136 des Einsatzwerkzeugs 114 ist bevorzugt zentrisch zu der kreisrunden Ausnehmung 132 in der Fußplatte 130 sowie zentrisch zu der Längsachse 106 des Maschinengehäuses 104 ausgebildet.

Abweichend von Fig. 2 können die Rotationsachse 136 des Einsatzwerkzeugs 114 und die Längsachse 106 des Maschinengehäuses 104 auch parallel zueinander versetzt verlaufen. Die Fußplatte 130 aus dem transparenten Kunststoff liegt an einer Oberseite 156 des Werkstücks 118 im Idealfall vollflächig an, wodurch eine präzise Horizontalführung der Oberfräse in Bezug zum Werkstück 118 gegeben ist. In der Darstellung von Fig. 1 weist eine parallel zu der Oberseite 156 verlaufende Unterseite 158 des plattenförmigen bzw. quaderförmigen Werkstücks 118 nach oben, aus der Zeichenebene heraus.

An dem Endflansch 124 des Trägerelements 122 der Abstützeinrichtung 120 ist eine erfindungsgemäße Kantenführung 200 zur präzisen, bevorzugt parallelen bzw. planparallelen Führung der Oberfräse 102 entlang einer geraden Kante 160 des Werkstücks 118 befestigt. Die Abstützeinrichtung 200 der Oberfräse 102 weist zu diesem Zweck unter anderem einen in Bezug zum Maschinengehäuse 104 radial nach außen gerichteten Haltearm 202 auf, an dessen maschinenseitigem, ersten Haltearmende 204 ein abgekröpfter Befestigungsabschnitt 206 ausgeformt ist und an dessen, von dem ersten Haltearmende 204 weggerichteten, zweiten Haltearmende 208 ein Führungsabschnitt 210 vorgesehen ist. Zwischen dem Befestigungsabschnitt 206 und dem Führungsabschnitt 210 verläuft bevorzugt ein ebener Mittelabschnitt 212, der die Geometrie eines ebenen, rechteckförmigen Flachprofils aufweist.

Der Führungsabschnitt 210 des Haltearms 202 ist mit einem vorzugsweise L-förmigen Profil 214 gebildet, das unter einem Winkel α von hier beispielhaft 90° an dem zweiten Haltearmende 208 ausgebildet ist. Ein erster Schenkel 216 des L-förmigen Profils 210 liegt an der Oberseite 156 des Werkstücks 118 und ein zweiter Schenkel 218 liegt an der Kante 160 des Werkstücks 118 an, wodurch eine präzise Kantenführung der Oberfräse 102 sichergestellt ist. Zwischen dem Befestigungsabschnitt 206 und dem Mittelabschnitt 212 des Haltearms 202 besteht hierbei ein solcher, durch Abkröpfen ausgebildeter Höhenversatz H, wobei der erste Schenkel 216 bündig mit der ebenfalls an der Oberseite 156 des Werkstücks 118 anliegenden Fußplatte 130 abschließt. Die beiden Schenkel 216, 218 weisen hier lediglich ungefähr eine gleiche Schenkellänge auf, können aber auch über eine ungleiche Schenkellänge verfügen.

Zur Aufnahme des Befestigungsabschnitts 206 des Haltearms 202 ist in dem Endflansch 124 des Trägerelements 122 der Abstützeinrichtung 120 bevorzugt eine radial durchgehende Nut 230 ausgebildet. Die der besseren zeichnerischen Übersicht halber hier nicht bezeichneten Nutwände der Nut 230 verlaufen vorzugsweise parallel zueinander in jeweils gleichem Abstand zu der Rotationsachse 136 des Einsatzwerkzeugs 114 bzw. mittig zur Ausnehmung 132 innerhalb der Fußplatte 130. Die Arretierung des Befestigungsabschnitts 206 des Haltearms 202 der Kantenführung 200 an dem Endflansch 124 der Abstützeinrichtung erfolgt bevorzugt mit Hilfe von zwei, hier nicht eingezeichneten Befestigungselementen, wie Gewindeschrauben oder dergleichen.

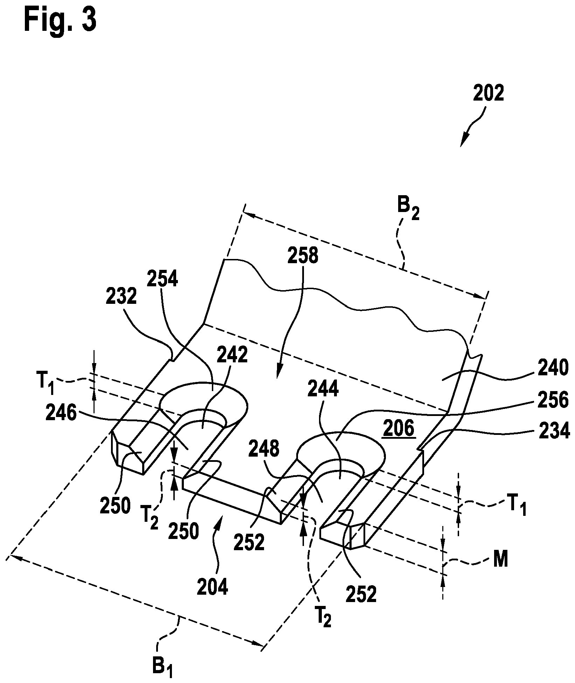

Fig. 3 zeigt den Befestigungsabschnitt 206 der Kantenführung 200 von Fig. 2. Vorzugsweise ist eine Breite B, des Befestigungsabschnitts 206 unter Schaffung von bevorzugt zwei kleinen, jeweils vorzugsweise gleich breiten Schultern 232, 234 größer als eine Breite B₂ eines Kröpfabschnitts 240 des Haltearms 202. Der Befestigungsabschnitt 206 des Halterarms 202 weist hier lediglich beispielhaft zwei zylindrische Durchgangsbohrungen 242, 244 für zwei hier nicht dargestellte Befestigungselemente auf.

Jede Durchgangsbohrung 242, 244 setzt sich bevorzugt in einem zu dem ersten Haltearmende 204 hin offenen axialen Längsschlitz 246, 248 fort. Jeder Längsschlitz 246, 248 verfügt bevorzugt über eine näherungsweise V-förmige Fase 250, 252 und jede der beiden Durchgangsbohrungen 242, 244 verfügt vorzugsweise über eine Senkung 254, 256. Die jeweils bevorzugt kanalartigen V-förmigen Fasen 250, 252 der beiden Längsschlitze 246, 248 sowie die beiden sich etwa halbkreisförmig erstreckenden Senkungen 254, 256 der Durchgangsbohrungen 242, 244 sind vorzugsweise jeweils in eine Unterseite 258 des Befestigungsabschnitts 206 des Haltearms 202 eingebracht. Eine Tiefe T₁ der beiden Senkungen 254, 256 der Durchgangsbohrungen 242, 244 ist bevorzugt jeweils geringfügig größer bemessen als eine Tiefe T₂ der zum Einfädeln der Befestigungselemente in die beiden Durchgangsbohrungen 242, 244 dienenden Längsschlitze 246, 248. Infolgedessen wird der Einsteckvorgang des Befestigungsabschnitts 206 des Haltearms 202 in die Nut des Endflansches 124 der Abstützeinrichtung 120 der Oberfräse 102 unterstützt, da bevorzugt angesenkte Köpfe der Befestigungselemente in die Senkungen 254, 256 hineingleiten können. Die Tiefe T₁ der Senkungen 254, 256 der Durchgangsbohrungen 242, 244 ist zur Erreichung dieses Zwecks vorzugsweise um etwa 0,5 mm bis 1,0 mm größer bemessen als die Tiefe T₂ der beidseitigen V-förmigen Fasen 250, 252 der Längsschlitze 246, 248, d.h. es gilt näherungsweise T₂-T₁ = 0,5 bis 1,0 mm.

Der Haltearm 202 weist zudem im Bereich des Befestigungsabschnitts 206 illustrativ eine Materialstärke von M auf. Der besseren zeichnerischen Übersicht halber nicht bezeichnete Senkwinkel der Senkungen 254, 256 sowie ebenfalls nicht bezeichnete Fasenwinkel der V-förmigen Fasen 250, 252 betragen hier bevorzugt jeweils ungefähr 45°, können aber grundsätzlich jeden Winkelwert zwischen 30° und 60° aufweisen.

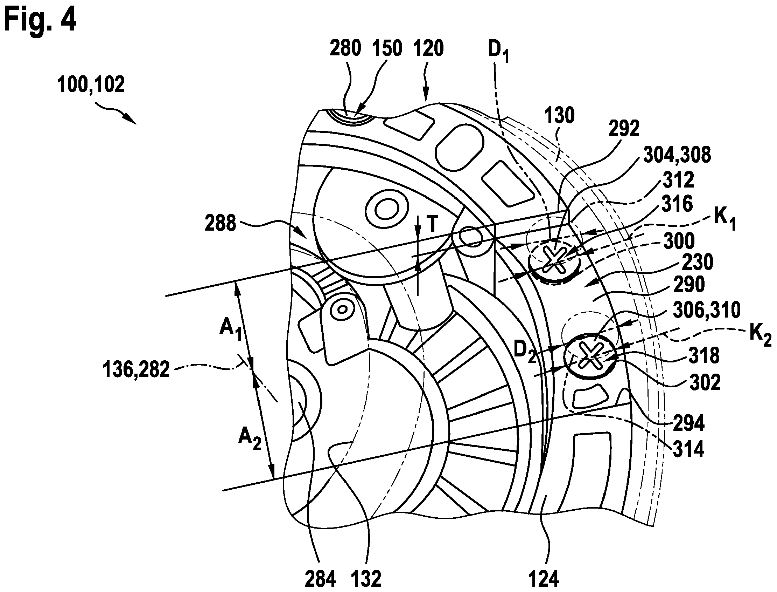

Fig. 4 zeigt den Endflansch 124 der Abstützeinrichtung 120 sowie die Fußplatte 130 von Fig. 1 und Fig. 2. Die mit einem vorzugsweise transparenten Kunststoff gebildete sowie vorzugsweise im Wesentlichen kreisringförmige Fußplatte 130 ist bevorzugt mittels der Gewindeschraube 150 und mindestens zwei weiteren baugleichen, hier jedoch nicht dargestellten Gewindeschrauben, fest mit dem vorzugsweise gleichfalls kreisringförmigen Endflansch 124 verschraubt. Eine Drehachse 282 einer nach Art eines Spannfutters ausgeführten Werkzeugaufnahme 284 für das hier nicht eingezeichnete Einsatzwerkzeug ist hier beispielhaft zentrisch in Bezug zu der Aussparung 132 der Fußplatte 130 angeordnet, die vorzugsweise wiederum zentrisch an dem Endflansch 124 der Abstützeinrichtung 120 der als Oberfräse 102 ausgeführten Handwerkzeugmaschine 100 befestigt ist. Die Drehachse 282 der Werkzeugaufnahme 284 fällt bevorzugt mit der Rotationsachse 136 des Einsatzwerkzeugs zusammen. Sowohl die Rotationsachse 136 als auch die Drehachse 282 sind hier beispielhaft senkrecht zur Fußplatte 130 und damit in Bezug zu der Oberseite des zu bearbeitenden plattenförmigen Werkstücks orientiert. Ein Kopf 280 der Gewindeschraube 150 sowie die Köpfe der mindestens zwei weiteren zur Befestigung der Fußplatte 130 dienenden, nicht dargestellten Gewindeschrauben, schließen bevorzugt ebenfalls bündig mit einer an dem zu bearbeitenden Werkstück anliegenden Oberseite 288 der Fußplatte 130 ab oder sind zumindest geringfügig in diese eingesenkt, um eine Beschädigung des Werkstücks auszuschließen.

In den Endflansch 124 ist bevorzugt die radial durchgehende Nut 230 mit einer axialen Tiefe von T eingelassen. Die axiale Tiefe T der Nut 230 ist hierbei vorzugsweise so bemessen, dass sie zumindest geringfügig größer ist als die Materialstärke M des Befestigungsabschnitts 206 von Fig. 3 des Haltearms 202 von Fig. 3, um einen leichtgängigen Einsteckvorgang zu ermöglichen. Die Nut 230 verfügt bevorzugt über eine angenähert rechteckförmige Querschnittsgeometrie mit einem vorzugsweise planen Nutgrund 290 sowie bevorzugt zwei zu dem Nutgrund 290 senkrecht verlaufenden Nutwänden 292, 294. Die beiden Nutwände 292, 294 verlaufen vorzugsweise parallel zu einander und weisen jeweils ungefähr einen gleich großen Abstand A₁, A₂ zu der Drehachse 282 der Werkzeugaufnahme 284 bzw. der Rotationsachse 136 des Einsatzwerkzeugs auf.

Zur zeitweisen Befestigung des Haltearms 202 der hier ebenfalls nicht dargestellten Kantenführung 200 von Fig. 2 an dem Endflansch 124 der Abstützeinrichtung 120 sind hier lediglich exemplarisch zwei nicht durchgehende (Sack-)Gewindebohrungen 300, 302 in dem Nutgrund 290 vorgesehen. In die beiden Gewindebohrungen 300, 302 ist hier jeweils eines von zwei Befestigungselementen 304, 306 eingebracht, die hier lediglich beispielhaft jeweils mit einer Gewindeschraube 308, 310 realisiert sind.

Zum Anziehen bzw. Festziehen der Gewindeschrauben 308, 310 weist die Fußplatte 130 bevorzugt zwei deckungsgleich zu diesen identisch ausgebildete, zylindrische Durchgangsbohrungen 312, 314 auf, deren Durchmesser D₁, D₂ vorzugsweise jeweils zumindest geringfügig kleiner ist als die jeweiligen Kopfdurchmesser K₁, K₂ der beiden Gewindeschrauben 308, 310, der aber bevorzugt gerade noch so groß ist, dass ein Schaft eines zum Anziehen der Gewindeschrauben 304, 306 dienenden, nicht eingezeichneten Handwerkzeugs, wie z.B. eines Schraubendrehers oder dergleichen, die Durchgangsbohrungen 312, 314 innerhalb der transparenten Fußplatte passieren kann. Infolgedessen können auch teilweise aus den Gewindebohrungen 300, 302 herausgedrehte bzw. teilweise gelöste Gewindeschrauben 308, 310 nicht aus der Nut 230 herausfallen und verloren gehen. Die beiden Durchmesser D₁, D₂ sowie die Durchmesser K₁, K₂ sind jeweils bevorzugt gleich groß.

Prinzipiell ist zur Befestigung des Haltearms 202 der Kantenführung 200 an dem Endflansch 124 der Abstützeinrichtung 120 eine Gewindeschraube ausreichend. Unter dem Gesichtspunkt der Verdrehsicherheit sowie zur Gewährleistung einer spielfreien Befestigung des Haltearms 202 an dem Endflansch 124 auch unter höheren mechanischen Belastungen ist jedoch eine Konfiguration mit mindestens zwei Gewindeschrauben bzw. Befestigungselementen zu bevorzugen.

Die beiden Gewindeschrauben 308, 310 weisen bevorzugt jeweils einen Senckopf 316, 318 auf, dessen Konizität vorzugsweise mit den V-förmigen Fasen der Längsschlitze 246, 248 von Fig. 3 und der Senkungen 254, 256 von Fig. 3 der Durchgangsbohrung 242, 244 von Fig. 3 im Befestigungsabschnitt 206 des Halterarms 202 korrespondiert, so dass eine mechanisch besonders belastbare Verbindung entsteht. Im Ausführungsbeispiel von Fig. 4 weisen die Senkköpfe 316, 318 der beiden Gewindeschrauben 308, 310 lediglich exemplarisch eine Antriebsgeometrie in der Form des bekannten Kreuzschlitzes (s.g. Pozidriv^{®}) auf.

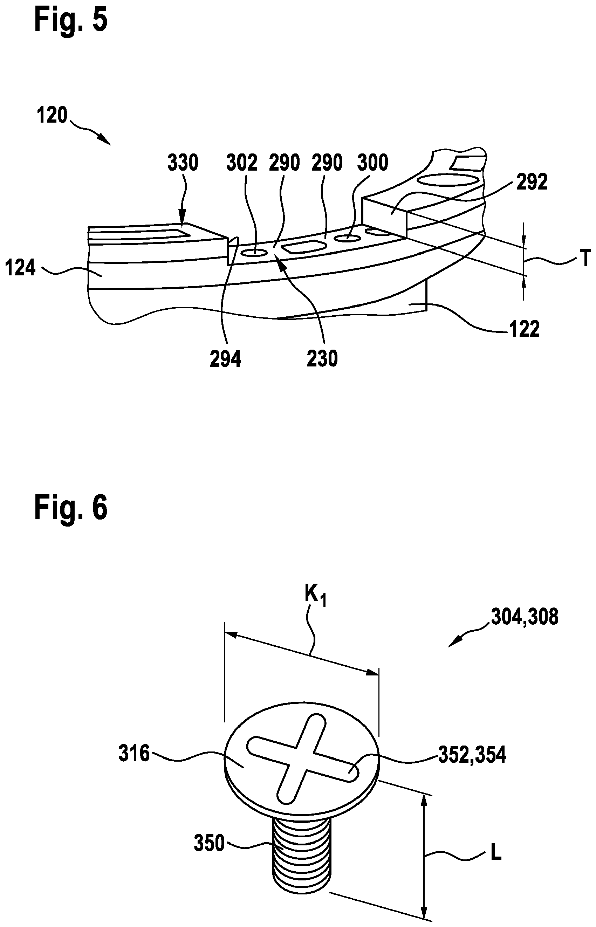

Fig. 5 zeigt eine perspektivische Teilansicht des kreisringförmigen Endflansches 124 von Fig. 3, mit zwei Gewindebohrungen für die Gewindeschrauben. Innerhalb des im Wesentlichen massiven Endflansches 124 des annähernd hohlzylindrischen Trägerelements 122 der Abstützeinrichtung 120 ist die radial durchgehende Nut 230 mit den beiden senkrecht zum Nutgrund 290 verlaufenden Nutwänden 292, 294 ausgebildet. Die axiale Tiefe T der Nut 230 bestimmt sich als axialer Abstand zwischen dem Nutgrund 290 und einer kreisringförmig umlaufenden Unterseite 330 des Endflansches 124, wobei an der Unterseite 330 des Endflansches 124 die hier nicht dargestellte transparente Fußplatte der Abstützeinrichtung 120 befestigt wird.

In den Nutgrund 290 sind die beiden Gewindebohrungen 300, 302 bevorzugt in einem umfangsseitig größtmöglichen Abstand voneinander eingebracht, um eine zuverlässige Befestigung des Haltearms der Kantenführung an dem Endflansch 124 des Abstützelements 122 der Abstützeinrichtung 120 mithilfe der hier nicht eingezeichneten Befestigungselemente bzw. Gewindeschrauben zu gewährleisten.

Fig. 6 zeigt die Gewindeschrauben von Fig. 4. Das als erste Gewindeschraube 308 ausgebildete Befestigungselement 304 weist bevorzugt einen im Wesentlichen zylindrischen Schaft 350 auf, der mit einem beispielsweise metrischen Gewinde versehen ist, das jeweils in eine der Gewindebohrungen 300, 302 von Fig. 5 innerhalb des Endflansches 124 von Fig. 5 der Abstützeinrichtung 120 einschraubbar ist. Eine Konizität des Senkkopfes 316 der Gewindeschraube 308 korrespondiert vorzugsweise mit den V-förmigen Fasen der Längsschlitze 246, 248 sowie der Senkungen der Durchgangsbohrungen 254, 256 in dem Befestigungsabschnitt 206 des Haltearms 202 der Kantenführung 200. Ein Durchmesser K₂ des Senkkopfes 316 der Gewindeschraube 308 ist bevorzugt so bemessen, dass der Senkkopf 316 im vollständig in die Gewindebohrung des Endflansches 124 der Abstützeinrichtung 120 eingeschraubten Zustand der Gewindeschraube 308 zumindest bündig mit der Unterseite des Befestigungsabschnitts 206 des Haltearms 202 abschließt bzw. vollständig in die Senkung 254, 256 einer Durchgangsbohrung 242, 244 einsenkbar ist (vgl. Fig. 3).

Eine axiale Länge L der Gewindeschraube 308 bzw. eine axiale Länge L des Schafts 350 der Gewindeschraube 308 ist bevorzugt so bemessen, dass zwischen der Gewindeschraube 308 und der zugeordneten Gewindebohrung auch im vollständig gelösten bzw. herausgeschraubten Zustand der Gewindeschraube 308 ein Gewindeeingriff von zwei bis drei Gewindegängen bestehen bleibt. Durch fortgesetztes Lösen der Gewindeschraube 308 kann diese höchstens unterseitig an die transparente Fußplatte axial anstoßen. Ein weiteres Lösen der Gewindeschraube 308 durch den Benutzer ist daher praktisch unmöglich. Aufgrund dessen wird ein Herausfallen der Gewindeschraube 308 aus dem Endflansch 124 der Abstützeinrichtung 120 zuverlässig vermieden.

Eine Antriebsgeometrie 352 der Gewindeschraube 308 ist hier lediglich exemplarisch nach Art eines Kreuzschlitzes 354 (s.g. Pozidriv^{®}) ausgeführt. Die Gewindeschraube 308 kann zur Ermöglichung höherer Anzugdrehmomente auch eine Antriebsgeometrie nach Art eines Innensechsrunds (s.g. Torx^{®}) oder eines Innenmehrkants (s.g. Inbus^{®}) aufweisen, oder eine andere Antriebsgeometrie. Die bevorzugt zweite, zur Befestigung des Haltearms 202 der Kantenführung 200 an dem Innenflansch der Abstützeinrichtung 120 der Oberfräse dienende Gewindeschraube ist bevorzugt konstruktiv identisch zu der hier eingehend beschriebenen Gewindeschraube 308 ausgebildet.

## Patentansprüche

1. Handwerkzeugmaschine (100), insbesondere Oberfräse (102), mit einem Maschinengehäuse (104) und einer Abstützeinrichtung (120) zur Führung der Handwerkzeugmaschine (100) an einem Werkstück (118), wobei die Abstützeinrichtung (120) ein Trägerelement (122) aufweist, in dem das Maschinengehäuse (104) zumindest abschnittsweise aufgenommen und befestigt ist, wobei an einem vom Maschinengehäuse (104) abgewandten Endflansch (124) des Trägerelements eine Fußplatte (130) für den Durchgriff eines Einsatzwerkzeugs (114), insbesondere eines Fräswerkzeugs (116), sowie zur Anlage an einem Werkstück (118) befestigt ist, und wobei am Endflansch (124) des Trägerelements (122) eine Kantenführung (200) zur Führung der Handwerkzeugmaschine (100) entlang einer Kante (160) des Werkstücks (118) befestigbar ist, wobei im Endflansch (124) eine Nut (230) ausgebildet ist, in der ein Befestigungsabschnitt (206) eines Haltearms (202) der Kantenführung (200) zumindest bereichsweise formschlüssig aufnehmbar und mittels mindestens eines Befestigungselements (304, 306) befestigbar ist, **dadurch gekennzeichnet, dass** zur zeitweisen Befestigung der Kantenführung (200) an dem Endflansch (124) des Trägerelements (122) der Abstützeinrichtung (120) mindestens ein bevorzugt als Gewindeschraube (308, 310) ausgebildetes Befestigungselement (304, 306) vorgesehen ist, das in eine zugeordnete Gewindebohrung (300, 302) in einem Nutgrund (290) der Nut (230) einschraubbar ist.

2. Handwerkzeugmaschine nach Anspruch 1, **dadurch gekennzeichnet, dass** eine Tiefe (T) der Nut (230) größer bemessen ist als eine Materialstärke (M) des Befestigungsabschnitts (206) des Haltearms (202).

3. Handwerkzeugmaschine nach Anspruch 1 oder 2, **dadurch gekennzeichnet, dass** der Befestigungsabschnitt (206) des Haltearms (202) mindestens eine Durchgangsbohrung (242, 244) für die mindestens eine Gewindeschraube (308, 310) aufweist und die mindestens eine Durchgangsbohrung (242, 244) in einen zu einem Haltearmende (204) hin offenen Längsschlitz (246, 248) übergeht.

4. Handwerkzeugmaschine nach Anspruch 3, **dadurch gekennzeichnet, dass** der mindestens eine Längsschlitz (246, 248) eine V-förmige Fase (250, 252) und die mindestens eine Durchgangsbohrung (242, 244) eine Senkung (254, 256) aufweisen, wobei die Fase (250, 252) und Senkung (254, 256) im Bereich einer vom Maschinengehäuse (104) abgewandten Unterseite (258) des Befestigungsabschnitts (206) des Haltearms (202) vorgesehen sind und die Senkung (254, 256) tiefer als die Fase (250, 252) ausgebildet ist.

5. Handwerkzeugmaschine nach einem der Ansprüche 1 bis 4, **dadurch gekennzeichnet, dass** die Fußplatte (130) zumindest eine Durchgangsbohrung (312, 314) zum bevorzugt geringfügig spielbehafteten Durchführen eines Werkzeugs, insbesondere eines Schraubendrehers, zum Festziehen der mindestens einen Befestigungsschraube (308, 310) aufweist, wobei ein Durchmesser (D₁, D₂) dieser Durchgangsbohrung (312, 314) kleiner als ein Kopfdurchmesser (K₁, K₂) der mindestens einen Gewindeschraube (308, 310) ist und die zumindest eine Durchgangsbohrung (312, 314) der Fußplatte (130) zentrisch und oberhalb der mindestens einen Gewindebohrung (300, 302) des Nutgrunds (290) ausgebildet ist.

6. Handwerkzeugmaschine nach einem der Ansprüche 3 bis 5, **dadurch gekennzeichnet, dass** die mindestens eine Gewindeschraube (308, 310) einen im Wesentlichen korrespondierend zu der Fase (250, 252) des Längsschlitzes (246, 248) und der Senkung (254, 256) der Durchgangsbohrung (242, 244) ausgeführten Senkkopf (316, 318) aufweist.

7. Handwerkzeugmaschine nach einem der Ansprüche 1 bis 6, **dadurch gekennzeichnet, dass** die mindestens eine Gewindeschraube (308, 310) eine derartige axiale Länge (L) aufweist, dass die mindestens eine Gewindeschraube (308, 310) stets im Gewindeeingriff mit der zugeordneten Gewindebohrung (300, 302) steht.

8. Handwerkzeugmaschine nach einem der Ansprüche 1 bis 7, **dadurch gekennzeichnet, dass** die kreisringförmige Fußplatte (130) mit einem transparenten Kunststoff gebildet ist.

9. Handwerkzeugmaschine nach Anspruch 8, **dadurch gekennzeichnet, dass** der Senkkopf (316, 318) der mindestens einen Gewindeschraube (308, 310) zum Festziehen mittels des Werkzeugs eine Antriebsgeometrie (352) nach Art eines Kreuzschlitzes (354), eines Innensechsrunds oder eines Innenmehrkants für das Werkzeug aufweist.

10. Kantenführung (200) zur Führung einer Handwerkzeugmaschine (100) gemäß einem der vorhergehenden Ansprüche entlang einer Kante (160) eines Werkstücks (118), mit einem Haltearm (202), der einen Befestigungsabschnitt (206) aufweist, in dem mindestens eine Durchgangsbohrung (242, 244) für eine zugeordnete Gewindeschraube (308, 310) ausgebildet ist, wobei die mindestens eine Durchgangsbohrung (242, 244) in einen zu einem Haltearmende (204) hin offenen Längsschlitz (246, 248) übergeht, und wobei der Längsschlitz (246, 248) eine V-förmige Fase (250, 252) und die mindestens eine Durchgangsbohrung (242, 244) eine Senkung (254, 256) aufweist.

11. Werkzeugsystem mit einer Handwerkzeugmaschine (100) gemäß einem der Ansprüche 1 bis 9 und einer Kantenführung (200) gemäß Anspruch 10.

## Claims

1. Hand-held power tool (100), in particular router (102), having a machine housing (104) and having a supporting device (120) for guiding the hand-held power tool (100) on a workpiece (118), wherein the supporting device (120) has a carrier element (122) in which the machine housing (104) is at least sectionally received and fastened, wherein a base plate (130) for passage of an insert tool (114), in particular a milling tool (116), and for abutment against a workpiece (118) is fastened to an end flange (124), directed away from the machine housing (104), of the carrier element, and wherein an edge guide (200) for guiding the hand-held power tool (100) along an edge (160) of the workpiece (118) is able to be fastened to the end flange (124) of the carrier element (122), wherein, in the end flange (124), there is formed a groove (230) in which a fastening portion (206) of a holding arm (202) of the edge guide (200) is able to be received in a form-fitting manner at least regionally and is able to be fastened by means of at least one fastening element (304, 306), **characterized in that**, for temporary fastening of the edge guide (200) to the end flange (124) of the carrier element (122) of the supporting device (120), provision is made of at least one fastening element (304, 306), preferably in the form of a threaded screw (308, 310), which is able to be screwed into an associated threaded bore (300, 302) in a groove base (290) of the groove (230).

2. Hand-held power tool according to Claim 1, **characterized in that** a depth (T) of the groove (230) is dimensioned to be greater than a material thickness (M) of the fastening portion (206) of the holding arm (202).

3. Hand-held power tool according to Claim 1 or 2, **characterized in that** the fastening portion (206) of the holding arm (202) has at least one passage bore (242, 244) for the at least one threaded screw (308, 310), and the at least one passage bore (242, 244) transitions into a longitudinal slot (246, 248) which is open towards a holding-arm end (204).

4. Hand-held power tool according to Claim 3, **characterized in that** the at least one longitudinal slot (246, 248) has a V-shaped bevel (250, 252), and the at least one passage bore (242, 244) has a countersink (254, 256), wherein provision is made of the bevel (250, 252) and countersink (254, 256) in the region of a bottom side (258), directed away from the machine housing (104), of the fastening portion (206) of the holding arm (202) and the countersink (254, 256) is configured to be deeper than the bevel (250, 252).

5. Hand-held power tool according to one of Claims 1 to 4, **characterized in that** the base plate (130) has at least one passage bore (312, 314) for passage, preferably with slight play, of a tool, in particular a screwdriver, for tightening of the at least one fastening screw (308, 310), wherein a diameter (D₁, D₂) of said passage bore (312, 314) is smaller than a head diameter (K₁, K₂) of the at least one threaded screw (308, 310) and the at least one passage bore (312, 314) of the base plate (130) is configured centrically and to be above the at least one threaded bore (300, 302) of the groove base (290).

6. Hand-held power tool according to one of Claims 3 to 5, **characterized in that** the at least one threaded screw (308, 310) has a countersunk head (316, 318) which is designed so as to correspond substantially to the bevel (250, 252) of the longitudinal slot (246, 248) and to the countersink (254, 256) of the passage bore (242, 244).

7. Hand-held power tool according to one of Claims 1 to 6, **characterized in that** the at least one threaded screw (308, 310) has such an axial length (L) that the at least one threaded screw (308, 310) is constantly in threaded engagement with the associated threaded bore (300, 302).

8. Hand-held power tool according to one of Claims 1 to 7, **characterized in that** the circular-ring-shaped base plate (130) is formed with a transparent plastic.

9. Hand-held power tool according to Claim 8, **characterized in that** the countersunk head (316, 318) of the at least one threaded screw (308, 310), for being tightened by means of the tool, has a drive geometry (352) in the manner of a cross-shaped slot (354), a hexalobular socket or a polygonal socket for the tool.

10. Edge guide (200) for guiding a hand-held power tool (100) according to one of the preceding claims along an edge (160) of a workpiece (118), having a holding arm (202) which has a fastening portion (206) in which at least one passage bore (242, 244) for an associated threaded screw (308, 310) is formed, wherein the at least one passage bore (242, 244) transitions into a longitudinal slot (246, 248) which is open towards a holding-arm end (204), and wherein the longitudinal slot (246, 248) has a V-shaped bevel (250, 252) and the at least one passage bore (242, 244) has a countersink (254, 256).

11. Tool system having a hand-held power tool (100) according to one of Claims 1 to 9 and having an edge guide (200) according to Claim 10.

## Revendications

1. Outil-machine à main (100), en particulier défonceuse (102), comprenant un boîtier de machine (104) et un dispositif d'appui (120) pour le guidage de l'outil-machine à main (100) sur une pièce à travailler (118), le dispositif d'appui (120) présentant un élément de support (122) dans lequel le boîtier de machine (104) est reçu et fixé au moins partiellement, une plaque de base (130) pour le passage d'un outil d'insertion (114), en particulier d'un outil de fraisage (116), ainsi que pour l'appui sur une pièce à travailler (118) étant fixée sur une bride d'extrémité (124) de l'élément de support, opposée au boîtier de machine (104), et un guide de bord (200) pour le guidage de l'outil-machine à main (100) le long d'un bord (160) de la pièce à travailler (118) étant apte à être fixé sur la bride d'extrémité (124) de l'élément de support (122), une rainure (230) étant formée dans la bride d'extrémité (124), dans laquelle une section de fixation (206) d'un bras de maintien (202) du guide de bord (200) est apte à être reçue au moins par zones par complémentarité de formes et est apte à être fixée au moyen d'au moins un élément de fixation (304, 306), **caractérisé en ce que en ce que**, pour la fixation temporaire du guide de bord (200) sur la bride d'extrémité (124) de l'élément de support (122) du dispositif d'appui (120), il est prévu au moins un élément de fixation (304, 306) réalisé de préférence sous la forme d'une vis filetée (308, 310), qui est apte à être vissé dans un perçage fileté associé (300, 302) dans un fond de rainure (290) de la rainure (230).

2. Outil-machine à main selon la revendication 1, **caractérisé en ce qu'**une profondeur (T) de la rainure (230) est dimensionnée de manière à être supérieure à une épaisseur de matériau (M) de la section de fixation (206) du bras de maintien (202).

3. Outil-machine à main selon la revendication 1 ou la revendication 2, **caractérisé en ce que** la section de fixation (206) du bras de maintien (202) présente au moins un trou traversant (242, 244) pour ladite au moins une vis filetée (308, 310) et ledit au moins un trou traversant (242, 244) évolue en une fente longitudinale (246, 248) ouverte vers une extrémité (204) du bras de maintien.

4. Outil-machine à main selon la revendication 3, **caractérisé en ce que** ladite au moins une fente longitudinale (246, 248) présente un chanfrein en forme de V (250, 252) et ledit au moins un trou traversant (242, 244) une fraisure (254, 256), le chanfrein (250, 252) et la fraisure (254, 256) sont prévus dans la zone d'une face inférieure (258), opposée au boîtier de machine (104), de la section de fixation (206) du bras de maintien (202) et la fraisure (254, 256) est réalisée de façon à être plus profonde que le chanfrein (250, 252).

5. Outil-machine à main selon l'une des revendications 1 à 4, **caractérisé en ce que** la plaque de base (130) présente au moins un alésage traversant (312, 314) pour le passage, de préférence avec un faible jeu, d'un outil, en particulier d'un tournevis, pour le serrage de ladite au moins une vis de fixation (308, 310), un diamètre (D₁, D₂) de ce trou de passage (312, 314) étant inférieur à un diamètre de tête (K₁, K₂) de ladite au moins une vis filetée (308, 310) et ledit au moins un trou de passage (312, 314) de la plaque de base (130) étant centrés et formés au-dessus dudit au moins un trou fileté (300, 302) du fond de la rainure (290).

6. Outil-machine à main selon l'une des revendications 3 à 5, **caractérisé en ce que** ladite au moins une vis filetée (308, 310) présente une tête fraisée (316, 318) réalisée sensiblement de façon correspondante au chanfrein (250, 252) de la fente longitudinale (246, 248) et à la fraisure (254, 256) du trou traversant (242, 244).

7. Outil-machine à main selon l'une des revendications 1 à 6, **caractérisé en ce que** ladite au moins une vis filetée (308, 310) présente une longueur axiale (L) telle que ladite au moins une vis filetée (308, 310) est toujours en prise par filetage avec l'alésage fileté (300, 302) associé.

8. Outil-machine à main selon l'une des revendications 1 à 7, **caractérisé en ce que** la plaque de base (130) en forme d'anneau circulaire est formée en une matière plastique transparente.

9. Outil-machine à main selon la revendication 8, **caractérisé en ce que** la tête fraisée (316, 318) de ladite au moins une vis filetée (308, 310) destinée à être serrée au moyen de l'outil présente une géométrie d'entraînement (352) de type cruciforme (354), hexagonale ou polygonale interne pour l'outil.

10. Guide de bord (200) pour guider un outil-machine à main (100) selon l'une des revendications précédentes le long d'un bord (160) d'une pièce à travailler (118), comprenant un bras de maintien (202) qui présente une section de fixation (206) dans laquelle au moins un trou traversant (242, 244) est formé pour une vis filetée associée (308, 310), ledit au moins un perçage traversant (242, 244) évoluant en une fente longitudinale (246, 248) ouverte vers une extrémité de bras de fixation (204), et la fente longitudinale (246, 248) présentant un chanfrein en forme de V (250, 252) et ledit au moins un perçage traversant (242, 244) présentant une fraisure (254, 256).

11. Système d'outillage comprenant un outil-machine à main (100) selon l'une des revendications 1 à 9 et un guide de bord (200) selon la revendication 10.
